# EUROPÄISCHE PATENTANMELDUNG

(11) **EP 2 346 059 A2**
(43) Veröffentlichungstag der Anmeldung: **20.07.2011**
(21) Anmeldenummer: 10195429.5
(22) Anmeldetag: 16.12.2010
(51) Int. Cl.: H01H 31/00, H01H 31/28, H01H 33/42, H01H 33/02

(54) **Vorrichtung zum schalten eines Stromkreises**

(30) Priorität: 18.01.2010 EP 10150960
(71) Anmelder: ABB Technology AG, 8050 Zürich (CH)
(72) Erfinder: Sologuren-Sanchez, Diego, CH-5430, Wettingen (CH); Erford, Tobias, 8050, Zürich (CH)
(74) Vertreter: ABB Patent Attorneys

(57) **Zusammenfassung**

Ein gasisolierter Hoch- oder Mittelspannungsschalter umfasst ein metallgekapseltes Gehäuse (80), welches einen Gasraum begrenzt, ein um eine erste Längsachse (v) drehbar angeordnetes Schaltelement (15), das dazu ausgelegt ist, durch Drehung einen Kontakt mit einem Kontaktelement (20) zu schalten, eine Drehwelle (25) mit einer zweiten Längsachse (w), die gegenüber der ersten Längsachse (v) versetzt ist, sowie ein mit der Drehwelle (25) zusammenwirkendes Hilfsgetriebe (30), das bei Drehung der Drehwelle (25) eine Drehbewegung des Schaltelements (15) um die erste Längsachse (v) bewirkt.

## Beschreibung

Aspekte der Erfindung betreffen das Gebiet der elektrischen Schalter, insbesondere der Schaltanlagen für Hoch- oder Mittelspannung. Im Speziellen betreffen Aspekte Ausführungsformen eines Erd- oder Trennschalters.

Bei Wartungsarbeiten an Hoch- und Mittelspannungsanlagen wird gewöhnlich nicht nur die Stromzufuhr unterbrochen, sondern die normalerweise stromführenden Komponenten zusätzlich aus Sicherheitsgründen geerdet. Erdschalter, die üblicherweise in einem evakuierten oder mit einem Schutzgas gefüllten Gehäuse untergebracht sind, sind aus dem Stand der Technik bekannt.

So offenbart die FR 2803117 A1 einen Erdschalter, bei dem drei Schaltmesser für die drei Phasen über eine gemeinsame Antriebswelle angetrieben werden, die gleichzeitig die gemeinsame Drehachse der Schaltmesser ist. Bei Drehung der zu Isolationszwecken aus Kunststoff gefertigten Welle stellen die geerdeten Schaltmesser jeweils einen Kontakt mit im Normalbetrieb stromführenden Elementen her und erden diese.

Die US 5,382,765 offenbart einen Einphasen-Erdschalter für eine Hochdruck-Schaltanlage eines Hochspannungssystems. Darin ist ein Schaltelement drehfest mit einer metallischen Antriebwelle verbunden, die gegenüber dem Gehäuse des Schalters isoliert ist. Bei Drehung der Drehwelle stellt das über die Achse außerhalb des Gehäuses geerdete Schaltelement einen Kontakt mit einem Kontaktstück der sonst stromführenden Teile her und erdet somit die Anlage.

Auf Grund der typischen Dimensionen der entsprechenden Komponenten und des gleichzeitigen Schaltens dreier Phasen muss der, die Antriebswelle antreibende, Elektromotor beim Schalten ein erhebliches Drehmoment aufbringen. Dieses ist noch höher, wenn der Kontakt zwischen dem Schaltelement, häufig als Kontaktmesser ausgeführt, und dem Kontaktelement durch Reibschluss hergestellt wird. In diesem Fall muss der Motor zusätzlich ein Anfangsdrehmoment zur Überwindung des Widerstands beim Lösen des Kontakts aufbringen.

Da der Motor ein signifikanter Kostenfaktor für eine derartige Schaltvorrichtung ist, ist es wünschenswert, eine Schaltvorrichtung für die Erdung einer Mittel- oder Hochspannungsschaltanlage zu haben, die eine Erdung bei verringertem Drehmomentbedarf des Antriebs gegenüber dem Stand der Technik ermöglicht.

Um zumindest einige der oben genannten Probleme zu vermindern, wird daher ein gasisolierter Hoch- oder Mittelspannungsschalter gemäß Anspruch 1, eine Hoch- oder Mittelspannungsschaltanlage gemäß Anspruch 14 sowie die Verwendung eines Schalters als Erdschalter gemäß Anspruch 15 vorgeschlagen. Weitere Vorteile, Merkmale, Aspekte und Details der Erfindung sowie bevorzugte Ausführungen und besondere Aspekte der Erfindung ergeben sich aus den Unteransprüchen, der Beschreibung und den Figuren.

Gemäß einem Aspekt der Erfindung wird ein gasisolierter Hoch- oder Mittelspannungsschalter bereitgestellt, der ein metallgekapseltes Gehäuse umfasst, welches einen Gasraum begrenzt, sowie ein um eine erste Längsachse drehbar angeordnetes Schaltelement umfasst, das dazu ausgelegt ist, durch Drehung einen Kontakt mit einem Kontaktelement zu schalten. Ferner umfasst der Schalter eine Drehwelle mit einer zweiten Längsachse, die gegenüber der ersten Längsachse versetzt ist, sowie ein mit der Drehwelle zusammenwirkendes Hilfsgetriebe, das bei Drehung der Drehwelle eine Drehbewegung des Schaltelements um die erste Längsachse bewirkt. Der Antrieb des Schaltelements über eine bezüglich der ersten Längsachse des Schaltelements versetzte Antriebsachse (Drehwelle) beinhaltend die zweite Längsachse ermöglicht eine Reduzierung des nötigen Antriebsdrehmoments zur Bewegung des Schaltelements im Vergleich zu Schaltern, bei denen die Drehachse des Schaltelements gleichzeitig die mit einem Antrieb/Motor verbundene Antriebsachse (Drehwelle) ist.

Je nach Ausführungsform ist die Drehachse des Schaltelements nicht zur Übertragung eines Drehmoments zum Bewegen des Schaltelements eingesetzt, sondern dient lediglich als Dreh- und Angelpunkt. Anders ausgedrückt ist die Drehachse des Schaltelements bezüglich einer Kraftübertragung des Hilfsgetriebes auf das Schaltelement antriebslos.

Es hat sich gezeigt, dass hinsichtlich des Ziels eines möglichst geringen erforderlichen Antriebsdrehmoments zur Bewegung des Schaltelements vergleichsweise vorteilhafte Antriebsdrehmomente zur Bewegung des Schaltelements erzielbar sind, wenn folgende Bedingungen erfüllt sind:
■ in einer zur ersten Längsachse senkrechten Ebene ist eine Verbindungsgerade vorhanden;
■ die Verbindungsgerade erstreckt sich zwischen der ersten Längsachse und dem Angriffspunkt (genauer gesagt durch eine von ihm definierten dritten Längsachse) und ist endseitig durch die erste Längsachse und den Angriffspunkt begrenzt;
■ die zweite Längsachse der Drehwelle durchstößt die Ebene an einem ersten Punkt;
■ eine den ersten Punkt und die Verbindungsgerade verbindende erste Normale in der Ebene ist betragsmäßig maximal so lang, wie die Verbindungsgerade selber betragsmäßig lang ist.

Noch geringere Antriebsdrehmomente der Drehwelle sind erreichbar, wenn die erste Normale in der Ebene maximal halb so lang ist, wie die Verbindungsgerade (16). Dies trifft insbesondere in einer Offenstellung des erfindungsgemässen gasisolierten Hoch- oder Mittelspannungsschalters zu.

Je nach Ausgestaltung des Hilfsgetriebes und der Drehwelle ist das Antriebsdrehmoment der Drehwelle zusätzlich verringerbar, wenn in Richtung der Verbindungsgeraden gesehen der erste Punkt in der Ebene näher beim Angriffspunkt angeordnet ist, als bei der ersten Längsachse des Schaltelements. Die Entfernung zwischen dem ersten Punkt und dem Angriffspunkt wird nachstehend als ,erster Abstand' bezeichnet. Bei einer Ausführungsform des Hilfsgetriebes als ein drehfest mit der Drehwelle verbundener Hebel ist der erste Abstand beispielsweise durch eine Verkürzung einer sich radial zur zweiten Längsachse und von Letzterer zum Angriffspunkt erstreckenden Hebellänge verringerbar. Dabei versteht sich von selbst, dass beispielsweise bei einer im Betrieb des Schalters auf Erdpotential liegender Drehwelle ein vorgeschriebener elektrischer Isolationsabstand zwischen Schaltelement und Drehwelle eingehalten werden muss.

Wenn ein besonders kompakter Antrieb des Schaltelements realisiert werden soll, so empfiehlt sich je nach Anforderungen an den Schalter beziehungsweise des Schalters eine Anordnung des ersten Punktes auf der Verbindungsgeraden, zumindest in der Grundstellung des Schalters. Unter dem Begriff Grundstellung wird hierbei eine Schaltstellung des Schaltelements verstanden, bei welchem das Schaltelement elektrisch leitend mit einem Kontaktelement wie etwa einer Phasenschiene verbunden ist.

Gemäß einem weiteren Aspekt der Erfindung wird eine gasisolierte Schaltanlage bereitgestellt, die einen gasisolierten Hoch- oder Mittelspannungsschalter umfasst. Dieser umfasst ein metallgekapseltes Gehäuse, welches einen Gasraum begrenzt, sowie ein um eine erste Längsachse drehbar angeordnetes Schaltelement, das dazu ausgelegt ist, durch Drehung einen Kontakt mit einem Kontaktelement zu schalten. Ferner umfasst der Schalter eine Drehwelle mit einer zweiten Längsachse, die gegenüber der ersten Längsachse versetzt ist, sowie ein mit der Drehwelle zusammenwirkendes Hilfsgetriebe, das bei Drehung der Drehwelle eine Drehbewegung des Schaltelements um die erste Längsachse bewirkt.

Gemäß einem weiteren Aspekt der Erfindung wird die Verwendung eines gasisolierten Hoch- oder Mittelspannungsschalters als Erdschalter in einer gasisolierten Schaltanlage vorgeschlagen. Der Schalter umfasst ein metallgekapseltes Gehäuse, welches einen Gasraum begrenzt, sowie ein um eine erste Längsachse drehbar angeordnetes Schaltelement, das dazu ausgelegt ist, durch Drehung einen Kontakt mit einem Kontaktelement zu schalten. Ferner umfasst der Schalter eine Drehwelle mit einer zweiten Längsachse, die gegenüber der ersten Längsachse versetzt ist, sowie ein mit der Drehwelle zusammenwirkendes Hilfsgetriebe, das bei Drehung der Drehwelle eine Drehbewegung des Schaltelements um die erste Längsachse bewirkt.

Im Weiteren soll die Erfindung anhand von in Figuren dargestellten Ausführungsbeispielen erläutert werden, aus denen sich weitere Vorteile und Abwandlungen ergeben. Dazu zeigen:
- Fig. 1: zeigt eine perspektivische Ansicht eines Schalters gemäß einem Ausführungsbeispiel;
- Fig. 2: zeigt eine Seitenansicht eines Schalters gemäß Fig. 1, wobei der Kontakt geöffnet ist;
- Fig. 3: zeigt eine weitere Seitenansicht des in Fig. 2 gezeigten Schalters, wobei der Kontakt geschlossen ist;
- Fig. 4: zeigt eine Querschnittsansicht entlang der Strecke A-A des in Figur 3 dargestellten Schalters;
- Fig. 5: zeigt eine schematische Querschnittsansicht eines weiteren Ausführungsbeispiels; und
- Fig. 6: zeigt eine schematische Querschnittsansicht eines anderen Ausführungsbeispiels.

Bei den im Folgenden beschriebenen Ausführungsformen sind einzelne Aspekte und Merkmale modular mit den Merkmalen anderer Ausführungsformen kombinierbar. Durch eine solche Kombination können wiederum weitere Ausführungsformen erhalten werden, die ebenfalls als zur vorliegenden Offenbarung zugehörig anzusehen sind.

Im Folgenden wird die Erfindung anhand einer Ausführungsform als Erdschalter für Schutzgas-Schaltanlagen beziehungsweise gasisolierte Schaltanlagen für Hoch- oder Mittelspannung beschrieben. Unter einer gasisolierten Schaltanlage wird dabei ein Schaltfeld oder eine Unterstation verstanden. Die Erfindung kann jedoch auch z.B. als Trennschalter für Leistungsschalter und Schaltanlagen eingesetzt werden, auch für Vakuum-Schalter. Im Folgenden wird ferner zunächst ein Schalter für eine einzige (Leiter-) Phase beschrieben. Typischerweise sind drei Phasen mit jeweils zugehörigem Erdschalter vorhanden. Unter Phase wird im Betrieb des Schalters ein Leiter mit einem bestimmten, elektrischen Potential verstanden.

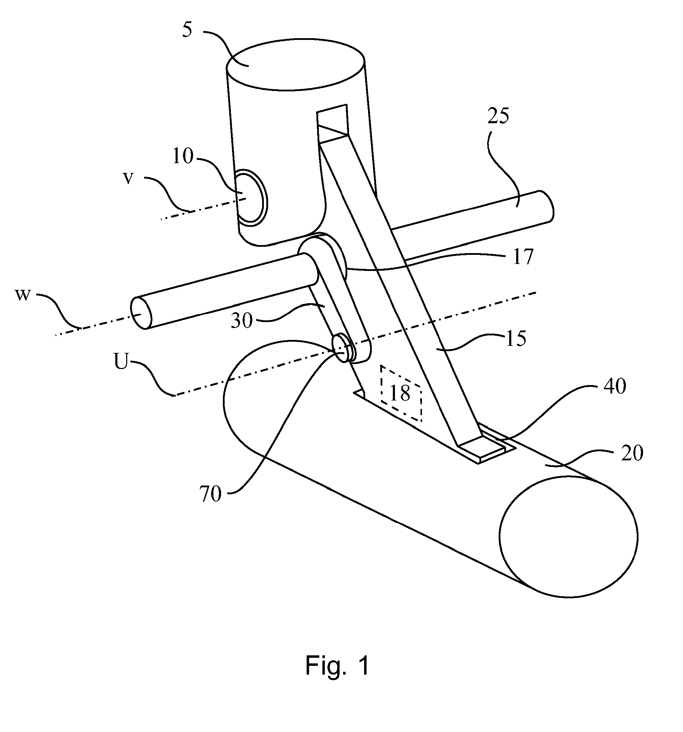

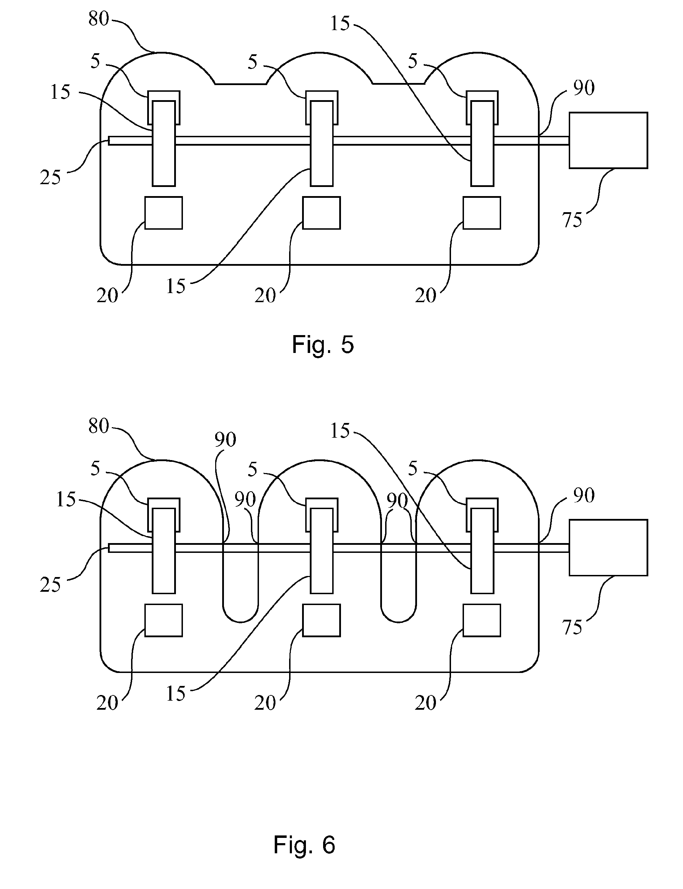

Fig. 1 zeigt ein Ausführungsbeispiel der Erfindung, das mit anderen hier genannten oder gezeigten Ausführungsbeispielen kombiniert werden kann, und das einen gasisolierten Schalter für Hoch- und Mittelspannungsschaltanlagen betrifft. Dieser umfasst ein um eine erste Längsachse v drehbar angeordnetes Schaltelement 15, sowie ein drehbar um eine zweite gegenüber der ersten Längsachse v versetzte Längsachse w angeordnetes Hilfsgetriebe 30 in Form eines Hebels 30. Der Begriff Achse oder Drehachse wird hier im Sinne einer mechanisch-physikalischen Achse, etwa aus Metall, verwendet, wobei letztere zur besseren Unterscheidung von den Längsachse mit numerischen Bezugszeichen bezeichnet sind. Die Drehung des Hebels 30 durch die Drehwelle 25 mit der Achse w bewirkt eine Drehung des Schaltelements 15. Je nach Drehrichtung der Drehwelle 25 wird auf diese Weise der elektrische Kontakt zwischen dem Schaltelement 15 und dem Kontaktelement 20 geöffnet oder geschlossen. Das Schaltelement 15 bzw. dessen Drehachse 10 (mit der ersten Längsachse v) ist typischerweise an einem mit dem Gehäuse des Schalters verbundenen Erdkontakt 5 angebracht. Die Verbindung des Hebels 30 mit dem Schaltelement 15 ist im dargestellten Beispiel über einen Bolzen 70 gelöst. Die Verbindung kann auch über andere, dem Fachmann bekannte, gleich wirkende Verbindungsmittel und -verfahren realisiert werden. Nicht in Fig. 1 dargestellt ist eine Antriebseinrichtung 75, typischerweise ein Elektromotor, der das Schaltelement 15 über die Drehwelle 25 und den Hebel 30 antreibt, sowie ein Gehäuse (80), in welchem der Schalter typischerweise gasdicht gekapselt ist (siehe dazu Fig. 5). Das Gehäuse ist mit einem isolierenden Gas, typischerweise SF₆, unter einem Druck von typischerweise 3 bis 8 bar gefüllt. Das Schaltelement 15 ist, typischerweise über den Erdkontakt 5, geerdet. Es stellt als elektrischer Leiter den dauernden elektrischen Kontakt der Kontaktelemente 20 mit Erdpotential her.

In einer durch das flächig gestaltete Schaltelements 15 definierten Ebene 18, welche sich senkrecht zur ersten Längsachse v erstreckt, sind die Achse des Bolzens 70 - sprich dessen dritte Längsachse u - und die erste Längsachse v durch eine gedachte Verbindungsgerade 16 miteinander verbunden. Die Verbindungsgerade 16 erstreckt sich zwischen der ersten Längsachse v des Schaltelements 15 und dem Angriffspunkt 70 (beziehungsweise der dritten Längsachse u) und ist endseitig durch die erste Längsachse v des Schaltelements 15 und den Angriffspunkt 70 begrenzt. Der Angriffspunkt 70 am Schaltelement 15 ist dabei durch den Bolzen 70 gebildet. Die zweite Längsachse w der Drehwelle 25 durchstößt die Ebene 18 an einem ersten Punkt 19. In einer Offenstellung des gasisolierten Hoch- oder Mittelspannungsschalters ist eine den ersten Punkt 19 und die Verbindungsgerade 16 verbindende erste Normale 21 in der Ebene 18 betragsmäßig etwa halb so lang, wie die Länge der Verbindungsgerade 16.

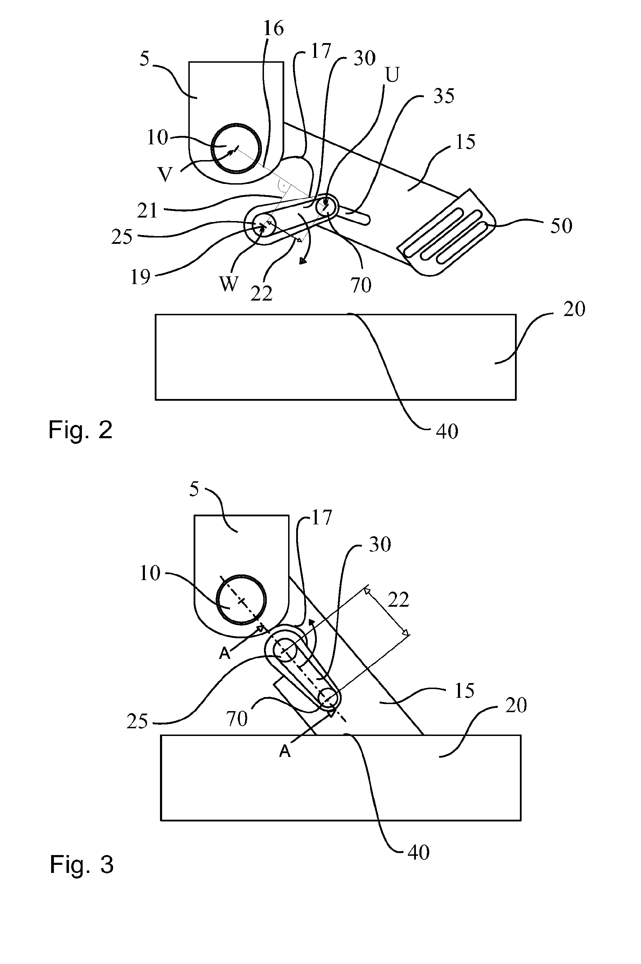

Wie aus der wie Figur 2 in der Ebene 18 vereinfacht dargestellten Figur 3 hervorgeht, liegt der erste Punkt 19 auf der Verbindungsgeraden und ist in der Grundstellung des Schalters etwa längsmittig zwischen der ersten Längsachse v des Schaltelements 15 und dem Angriffspunkt 70 angeordnet. Anders ausgedrückt, misst in Richtung der Verbindungsgeraden gesehen eine als erster Abstand 22 bezeichnete Entfernung in etwa die Hälfte der Länge der Verbindungsgerade.

Je nach Ausgestaltung des Hilfsgetriebes und der Drehwelle ist das Antriebsdrehmoment der Drehwelle zusätzlich verringerbar, wenn in Richtung der Verbindungsgeraden gesehen der erste Punkt in der Ebene näher beim Angriffspunkt angeordnet ist, als bei der der ersten Längsachse des Schaltelements.

Bei dem vorgeschlagenen Aufbau mit separierten geometrischen Achsen v und w hat die Separierung der beiden Achsen folgende Wirkung. Wie in Fig. 1 leicht zu erkennen ist, ist der effektive Hebelarm, mit dem der Hebel 30 am Schaltelement 15 angreift, kleiner als wenn das Schaltelement konventionell direkt über eine Drehwelle um die erste Längsachse v bewegt werden würde, da die zweite Längsachse w näher am Masseschwerpunkt des Schaltelements 15 liegt als die erste Längsachse v. Der effektive Hebelarm ist, wenn das Hilfsgetriebe 30 wie in Fig. 1 als einfacher Hebel ausgeführt ist, der Abstand zwischen der Drehwelle 25 und dem Masseschwerpunkt des Schaltelements 15. Im dargestellten Beispiel ist die Länge des effektiven Hebelarms, die mit der Drehposition des Schaltelements 15 variiert, im Mittel nur etwa fünfzig Prozent der Länge des Hebelarms, die sich bei Drehung des Schaltelements über eine Drehwelle mit der Achse v ergeben würde, was dem Stand der Technik entspräche. Bei gleicher Masse des Schaltelements ergibt sich folglich eine entsprechende Reduzierung des nötigen Antriebsdrehmoments zur Bewegung des Schaltelements. Diese Reduzierung liegt im gezeigten, nichtlimitierenden Beispiel im Mittel bei etwa fünfzig Prozent, wodurch ein kleinerer und kostengünstigerer Antriebsmechanismus, der typischerweise als Elektromotor ausgeführt ist, verwendet werden, als bei bisherigen Schaltern. In anderen Ausführungs-beispielen ist die Geometrie der Schaltvorrichtung so ausgelegt, dass sich eine noch größere Reduzierung des Hebelarms gegenüber Schaltern des Standes der Technik ergibt. Gleichzeitig kann wegen des geringeren zu übertragenden Drehmoments der Durchmesser der Drehwelle 25 kleiner gewählt werden. Eine Folge ist auch, dass beim Schaltvorgang bei einer gleichmäßigen Winkelgeschwindigkeit der Drehwelle 25 die Winkelgeschwindigkeit des Schaltelements 15 variiert. Ferner variiert typischerweise der geometrische Angriffspunkt des Hebels 30 am Schaltelement 15 während des Schaltvorgangs.

Die Drehwelle 25 ist in einem Ausführungsbeispiel drehfest mit dem Hebel 30 gekoppelt, so dass eine Drehung der Drehwelle eine Drehung des Hebels und damit über den Angriffspunkt des Hebels am Schaltelement 15 eine Drehung des Schaltelements 15 hervorruft. Der Hebel 30 greift in diesem Ausführungsbeispiel an einem Langloch 35 (in Fig. 1 nicht dargestellt) im Schaltelement 15 an. Dies wird weiter unten genauer erläutert.

Im in Fig. 1 dargestellten Ausführungsbeispiel ist das Schaltelement 15 über einen Bolzen 10 frei drehbar in einer Aussparung des Erdkontakts 5 gelagert. Dieser Bolzen stellt die Haupt-Drehachse des Schaltelements dar. Dieses wird über das Hilfsgetriebe 30 angetrieben bzw. bewegt, welches in diesem Ausführungsbeispiel als Hebel ausgelegt ist. Es ist drehfest mit der Antriebswelle 25 verbunden und ist über den Bolzen 70 mit dem Schaltelement verbunden. Ist der Schalter wie in der Figur 1 dargestellt konfiguriert, befindet sich die Drehwelle 25 typischerweise unterhalb des Schaltelements 15 und unterhalb von dessen Drehachse, dem Bolzen 10. Die Ortsangaben wie ,unterhalb' beziehen sich auf die in den Figuren dargestellten Schalterpositionen. Selbstverständlich sind die Schalter auch in anderen Einbaupositionen einsetzbar. Die Ortsangaben sollen lediglich zum besseren Verständnis der Erfindung dienen. Das Kontaktelement 20 mit der entsprechend länglichen Aussparung 40 ist so angebracht, dass sich Drehwelle 25 räumlich zwischen dem Kontaktelement 20 und dem Erdkontakt 5 befindet. Das Schaltelement 15 ist dabei als Kontaktmesser ausgeführt, das beim Schalten teilweise in die im Kontaktelement 20 vorgesehene Aussparung 40 eindringt, so dass bei geschlossenem Kontakt ein Teil des Kontaktmessers in der Aussparung 40 befindlich ist.

Das Hilfsgetriebe 30, das im in Fig. 1 gezeigten Ausführungsbeispiel ein einfacher Hebel ist, kann bei Bedarf auch durch aufwändigere Konstruktionen ersetzt werden, etwa eine Zahnräder/Hebel-Kombination oder eine Konstruktion mit mehreren Hebeln. Entsprechende Varianten sind dem Fachmann bekannt. Die Summe der möglichen Konstruktionen und Varianten, um die Drehung der Drehwelle 25 auf das Schaltelement 15 5 zu übertragen, wird hier summarisch als Hilfsgetriebe 30 bezeichnet. Es befindet sich typischerweise im Gasraum des Schaltergehäuses 80. In der in Fig.1 gezeigten Ausführungsform ist das Hilfsgetriebe 30 als Hebelbetriebe 30 realisiert. Nachfolgend wird das Hebelgetriebe auch schon mal schlicht als Hebel 30 bezeichnet.

Die Ebene 18, die durch die Drehbewegung des Schaltelements aufgespannt wird und senkrecht zu dessen Drehachse v steht, schneidet die Drehwelle 25 bzw. die zweite Längsachse w, den Bolzen 10 bzw. die erste Längsachse v, und den Bolzen 70, wobei alle diese Achsen bzw. Symmetrie- und Drehachsen jeweils Normalen zu der Ebene 18 der Drehung bilden.

Bei Bedarf sind in einer Ausführungsform des Schalters als Dreiphasenschalter beispielsweise drei der in Fig. 1 gezeigten Schaltvorrichtungen nebeneinander in einem gemeinsamen Gehäuse 80 mit gemeinsamen Gasraum angeordnet. Diese werden aus Platz-und ökonomischen Gründen von einem gemeinsamen Antriebsmechanismus betätigt, der über eine gemeinsame Drehwelle 25 auf die drei Schaltelemente 15 einwirkt. In anderen Ausführungsbeispielen kann auch der Schalter jeder Phase von einem eigenen Antrieb betätigt werden. Beim beschriebenen konventionellen Aufbau (Stand der Technik) mit gemeinsamer Dreh- und Antriebsachse wird die Isolierung der Schalter für verschiedene Phasen gegeneinander beispielsweise dadurch gewährleistet, dass zumindest Teile einer gemeinsamen Dreh- und Antriebswelle aus Kunststoff gefertigt sind. Da Kunststoff eine geringere Torsionsfestigkeit als Stahl hat, führt dies zur Notwendigkeit eines vergleichsweise großen Durchmessers der Welle. In der vorliegenden Ausführungsform kann die Achse 25 dagegen aus Stahl gefertigt werden, während für die Isolierung typischerweise eine oder mehrere Isolationselemente wie etwa Kunststoffbuchsen 65 oder -hülsen vorgesehen sind (in Fig. 1 nicht dargestellt), die aber nicht notwendigerweise am Angriffspunkt des Hebels 30 am Schaltelement 15 vorgesehen sind, in einem anderen Ausführungsbeispiel zwischen Drehwelle 25 und dem Hebel 30. In einem weiteren Ausführungsbeispiel weisen entweder Drehwelle 25, Hebel 30, oder Schaltelement 15 jeweils zumindest Bereiche oder Isolationselemente aus Kunststoff auf, um eine Isolation des Antriebs bzw. der Antriebseinrichtung 75, typischerweise eines Elektromotors, von den Schaltmessern zu gewährleisten, beziehungsweise bei mehreren Phasen auch die Isolation der Phasen voneinander zu gewährleisten.

Das Schaltelement 15 und der Erdkontakt 5 sind bei der gezeigten Ausführungsform vorzugsweise geerdet, während das Kontaktelement 20 einen Teil des zu erdenden Stromkreises bildet und daher im ungeerdeten Normalbetrieb unter Spannung steht. Das Schaltelement 15 steht typischerweise zeitlich nur im Moment des Erdens unter Spannung. Die Isolierung der Drehwelle 25 vom Schaltelement 30 wäre daher nicht unbedingt notwendig, sie dient vorrangig dem Zweck, an den Schaltelementen nach Phasen getrennt Messungen vornehmen zu können. Dies wäre nicht gewährleistet, wenn die Schaltelemente 15 über die Drehwelle 25, die je nach Ausführungsform vorzugsweise eine Metallwelle ist, ohne weitere Isolierung leitend verbunden wären.

In dem gezeigten Ausführungsbeispiel ist das Schaltelement 15 als Kontaktmesser ausgeführt, das bei Schließung des Kontakts zumindest teilweise in eine längliche Aussparung 40 des Kontaktelements 20 eindringt. Was unter einem Kontaktmesser oder Schaltmesser zu verstehen ist, gehört zum Standardwissen des Fachmanns. Auf diese Weise kann die Kontaktqualität bei fast gleichem Raumbedarf gegenüber einem flächig ausgeführten Kontakt erhöht werden. Das Schaltelement kann in anderen Ausführungsformen auch in anderen Formen als einem Kontaktmesser vorgesehen sein, z.B. mit einem Bolzen oder Stift, der in eine Bohrung des Kontaktelements 20 eindringt. Bevorzugt ist ein messerartiges Schaltelement, wobei die Begriff Kontaktmesser und Schaltmesser synonym dazu verwendet werden. Alle Ausführungsformen des Schaltelements tragen, unabhängig von ihrer spezifischen Ausführung, das gemeinsame Bezugszeichen 15.

Wie in Fig. 1 zu erkennen ist, wäre bei fester Länge des Hebels 30 und festgelegtem Ansatzpunkt am Schaltelement 15 durch den Versatz der beiden Längsachsen v und w keine Bewegung des Schaltelements möglich. Es werden verschiedene Ausführungsbeispiele vorgeschlagen, die dieser Tatsache Rechnung tragen. In einem in Fig. 2 und Fig. 3 dargestellten Ausführungsbeispiel ist der Ansatzpunkt des Hebels 30 am Schaltelement 15 variabel, indem das Hilfsgetriebe 30 an einem Langloch 35 oder einen Schlitz im Schaltelement an- oder eingreift. In dem dargestellten Ausführungsbeispiel ist das Hilfsgetriebe 30 ein starrer Hebel, was konstruktiv eine Basisvariante darstellt. Dies ist jedoch nur ein nicht-einschränkendes Beispiel. In einem anderen Ausführungsbeispiel ist das Hilfsgetriebe längenvariabel ausgelegt, etwa indem es aus zwei ineinanderschiebbaren Teilen gefertigt ist, wodurch das Langloch 35 durch zum Beispiel ein einfaches Loch ersetzt werden kann. Weitere Ausführungsformen des Hilfsgetriebes betreffen Mehrgelenkkonstruktionen (Drehgelenkkette), wobei das Hilfsgetriebe etwa aus mehreren starren Hebelsegmenten besteht, die zumindest teilweise beweglich gelenkig miteinander gekoppelt sind, oder die teilweise an einem feststehenden Teil der Vorrichtung drehfest oder drehbar befestigt sind. In einem Ausführungsbeispiel ist das Hilfsgetriebe 30 als Viergelenkkette ausgeführt.

Fig. 2 und Fig. 3 zeigen Seitenansichten zweier unterschiedlicher Schaltzustände der in Fig. 1 gezeigten Ausführungsform. In Fig. 2 ist die Schaltvorrichtung mit offenem Kontakt dargestellt, während in Fig. 3 der Kontakt geschlossen ist. Die Pfeile symbolisieren die Drehrichtungen, in die das Schaltelement 15 gedreht werden muss, um den jeweils anderen Schaltzustand zu erreichen. Fig. 2 zeigt, dass der Hebel 30 an einem Langloch 35 am Schaltelement 15 angreift. Dadurch wird ein Ausgleich des durch den Versatz der Achsen bedingten Wegunterschieds geschaffen. Das Langloch 35 geht typischerweise durch das Schaltelement 15 hindurch, kann aber auch ein- oder beidseitig als Sackloch oder Nut ausgeführt sein. Das Schaltelement 15 weist auf einer Längsseite eine Aussparung 17 auf, welche eine etwa halbkreisförmige Form hat. Im geschlossenen Zustand des Schalters nimmt diese Aussparung einen Teil der Drehwelle 25 auf.

In einem Ausführungsbeispiel sind an den Seitenflächen des Kontaktmessers 15 elektrische Kontaktelemente 50 vorgesehen. Diese können mit einer Federvorspannung versehen sein und üben beim Eindringen des Kontaktmessers 15 eine Kraft auf die inneren Seitenflächen der Aussparung 40 aus, um eine vordefinierte Stromübergangsqualität zu gewährleisten. Verfahren und Mittel zum Zweck der Verbesserung des Kontakts zwischen Kontaktmesser 15 und Kontaktelement 20 sind dem Fachmann bekannt.

Im in Fig. 2 und Fig. 3 dargestellten Ausführungsbeispiel ändert sich der effektive Hebelarm, mit dem das Angriffselement 30 am Schaltelement 15 ansetzt, mit der Position des Schaltelements, wie beim Vergleich der beiden Figuren anschaulich wird. In diesem Ausführungsbeispiel ist der effektive Hebelarm am günstigsten bzw. am kleinsten, wenn das Schaltelement 15 in der Position des geschlossenen Kontakts ist (Fig. 3). Dies ist insofern vorteilhaft, da das Überwinden der Reibung zwischen Innenseite der Aussparung 40 und den Seitenflächen des hier als Kontaktmesser ausgeführten Schaltelements 15 typischerweise den höchsten Kraftaufwand während des gesamten Schaltvorgangs erfordert. Als allgemeiner Aspekt der Erfindung ist das Übersetzungsverhältnis von der Antriebswelle 25 zu dem Schaltelement 15 nicht konstant, sondern von der Drehposition des Schaltelements 15 abhängig. Diese Eigenschaft des Schalters erlaubt es, die Hebelverhältnisse abhängig von Parametern des Schalters so auszulegen, dass der Drehmoment-Bedarf für den Antrieb der Drehwelle 25 etwa für das Lösen des Kontakts optimiert ist, d.h. an dieser Position des Schalters typischerweise möglichst gering ist.

Der Bolzen 10 mit der ersten Längsachse v, die Drehwelle 25 mit der zweiten Längsachse w sowie der Bolzen 70 mit der dritten Längsachse u sind unabhängig voneinander drehbar. Eine Drehung des Hebels 30 um einen bestimmten Winkel um seine Achse w bewirkt eine Drehung des Schaltelements 15 um die erste Längsachse v um einen betragsmäßig kleineren Winkel. Der Unterschied beider Winkel hängt von der geometrischen Auslegung des Schalters und den Hebelverhältnissen bzw. generell von der Auslegung des Hilfsgetriebes ab. Das Verhältnis der beiden Drehwinkel pro Zeiteinheit während der Bewegung variiert dabei abhängig von der Ausgangsposition und der Drehrichtung.

Ferner weist die in Fig. 2 und Fig. 3 dargestellte Ausführungsform elektrische Kontaktelemente 50 auf. Diese sind in der gezeigten Ausführungsform des Schalters auf mindestens einer Seitenfläche des Schaltelements 15 vorgesehen und mit mindestens einer länglichen Aussparung, Sackloch oder Langloch ausgeführt, in denen zum Beispiel federvorgespannte Kontaktelemente bereitgestellt sind, etwa Lamellen. Bei geschaltetem Kontakt des Schaltelements 15 mit dem Kontaktelement 20 üben die Kontaktelemente 50 eine Kraft gegen die Innenwandung der Aussparung 40 aus. Auf diese Weise kann eine vordefinierte Qualität des Stromübergangs gewährleistet werden. Die Ausgestaltung solcher federunterstützter Kontaktelemente oder auch Kontaktlamellen ist aus dem Stand der Technik bekannt und wird hier nicht weiter behandelt.

In einem weiteren Ausführungsbeispiel sind die Seitenflächen des Schaltelements 15 glatt ausgeführt, und die elektrischen Kontaktelemente sind an den Seitenwänden der Aussparung 40 vorgesehen. Ebenso können Kontaktelemente 50 sowohl auf mindestens einer Seite des Schaltelements 15 als auch innerhalb der Aussparung 40 vorgesehen sein.

Die Aussparung 40 ist typischerweise zur gegenüberliegenden (hier der unteren) Seite des Kontaktelements 20 geschlossen ausgebildet, so dass sich in der gezeigten Einbaulage des Schalters allfälliger durch Reibung entstehender Abrieb des Schaltelements 15 oder der Kontaktelemente 50 am Boden der Aussparung 40 ansammeln, ohne weiteren Schaden zu verursachen. Auf diese Weise kann der Abrieb beispielsweise nicht in Bereiche gelangen, in denen er die Durchschlagsfestigkeit beeinflussen könnte. Die Aussparung 40 hat typischerweise eine im wesentliche quaderförmige Form, wobei eine Seitenfläche die längliche Öffnung im Kontaktelement 20 darstellt, in die das Schaltelement 15 beim Schließen des Kontakts eindringt (siehe Fig. 1).

Dabei weist das Grundmaterial der Kontaktelemente 50 je nach Anforderungen und Einsatzzweck Kupfer auf, und ist ferner oft mit einer Silberschicht auf der Oberfläche versehen. Analog ist beispielsweise das Schaltelement 15 aufgebaut. Es sind jedoch auch andere Ausführungsformen möglich, so kann etwa ein im Erdungsfall nicht leitender Teil des Schaltelements 15 Kunststoff aufweisen. Sofern dabei die grundsätzliche, hier beschriebene Funktionsweise gewährleistet ist, sind beliebige Materialkombinationen für die verschiedenen Teile möglich und werden als im Schutzumfang der Anmeldung enthalten betrachtet.

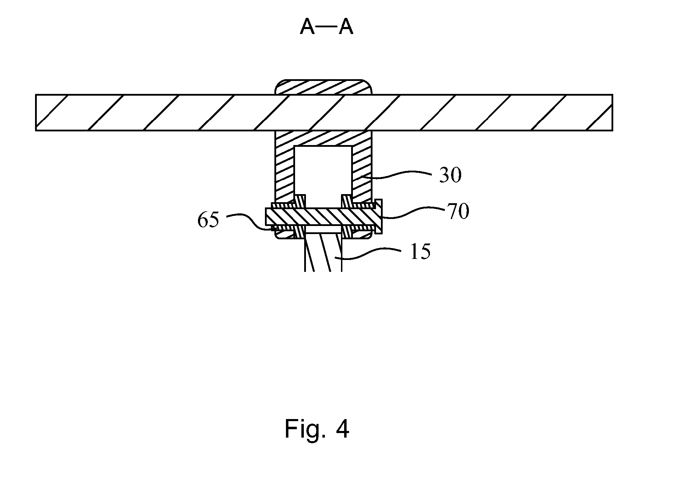

Fig. 4 zeigt einen Querschnitt durch eine Ausführungsform entlang der Strecke A-A in Fig. 3. Zusätzlich zu den in Fig. 3 dargestellten Merkmalen sind dabei noch zwei Hülsen 65 dargestellt, die typischerweise aus Kunststoff sind und die Isolierung des Schaltelements 15 vom Hebel 30 gewährleisten. In einer anderen Ausführungsform ist die Isolierung durch eine einzelne einstückige Hülse 65 gewährleistet. Diese Isolierung kann in anderen Ausführungsformen auch an anderen Stellen ausgeführt sein, etwa zwischen Drehwelle 25 und dem Hebel 30.

In einem weiteren, als Querschnitt schematisch in Fig. 5 dargestellten Ausführungsbeispiel sind drei gleiche Ausführungsformen der beschriebenen Schaltvorrichtungen zusammengefasst, um gleichzeitig drei Phasen einer dreiphasigen Schaltanlage zu erden. Sie werden von einer gemeinsamen, durchgehenden Drehwelle 25 angetrieben, die von einem gemeinsamen Elektromotor 75 angetrieben wird. Die drei Vorrichtungen sind von einem gemeinsamen, gasdichten Gehäuse 80 mit einem gemeinsamen Gasraum umschlossen, in dem auch die Drehwelle 25 verläuft. Sie verläuft, außer dem herausgeführten Teil für den Antrieb, zum größeren Teil ihrer Gesamtlänge innerhalb des Gehäuses 80 und wird mittels einer gasdichten Durchführung 90 aus dem Gehäuse 80 herausgeführt. Als allgemeiner Aspekt ist zumindest ein Teil der Antriebswelle 25 zwischen zwei Schaltelementen 15 vollständig innerhalb des Gehäuses 80 bzw. innerhalb dessen Gasvolumen angeordnet.

Die Erdung des Erdkontakts 5 ist in Fig. 5 und Fig. 6 nicht dargestellt. Sie ist in einem Ausführungsbeispiel mit einem Leiter hergestellt, der vom Erdkontakt 5 (bzw. bei drei Phasen mit mehreren Leiterteilen von allen drei Erdkontakten) zu einer isolierten Durchführung im Gehäuse 80 verläuft. Außerhalb des Gehäuses ist der Leiter sowohl mit einem Erdpotential als auch mit dem Gehäuse 80 selbst leitend verbunden. Je nach Anforderungen ist ein solcher Leiter eine Kupferlitze. In einer weiteren Ausführungsform ist der Erdkontakt selber elektrisch leitend gehäusenah innen am Gehäuse 80 angeordnet, so dass keine Kupferlitzen oder dergleichen erforderlich sind. Die mit rechteckigen Querschnitten dargestellten Kontaktelemente 20 verlaufen in diesem Beispiel senkrecht zur Zeichenebene. Das gasdichte Gehäuse 80 ist entweder evakuiert oder mit einem Isoliergas wie SF₆, typischerweise unter Überdruck, gefüllt. Einige Merkmale aus den Ausführungsbeispielen der Figuren 1, 2, 3, und 4 sind in Fig. 5 aus illustratorischen Gründen nicht dargestellt.

Die Kontaktelemente 20 sind typischerweise Bestandteil der im Normalbetrieb, das heißt im nicht geerdeten Betrieb der Anlage, stromführenden Nominalleiter bzw. mit solchen verbunden. Das Gehäuse 80 besitzt typischerweise nach Phasen bzw. Anschlussgruppen separierte Anschlussöffnungen, die die Nominalleiter aufnehmen. Zwei Anschlussöffnungen je Phase können an gegenüberliegenden Seiten des Gehäuses so angeordnet sein, dass die Normalen auf die Anschlussöffnungen im Wesentlichen auf einer Geraden liegen, so dass ein gerader Durchgang eines Nominalleiters durch das Gehäuse 80 gewährleistet ist. Die Anschlussöffnungen der verschiedenen Nominalleiter bzw. Anschlussgruppen auf einer Gehäuseseite liegen jeweils in einer Ebene. Je nach Ausführungsform sind alle drei Öffnungen in gleichem Abstand voneinander entfernt entlang einer Geraden angeordnet. Je nach Bedarf weist der gasisolierte Hoch- oder Mittelspannungsschalter auf der Eingangs- und/oder der Ausgangsseite der Nominalleiter pro Phase jeweils eine gehäuseseitige Anschlussöffnung auf, welche den jeweiligen Nominalleiter umgreift und in einen flanschartigen Adapterabschnitt mündet. In jedem Fall dient je eine gehäuseseitige Anschlussöffnung zur separaten Aufnahme von einem einzigen Primärphasenanschluss bzw. Nominalleiter. Weiter ist der flanschartige Adapterabschnitt mit dem flanschartigen Adapterabschnitt eines benachbarten Moduls mechanisch lösbar verbindbar.

Auf diese Weise ist ein dreiphasig gekapselter gemeinsamer Gasraum mit einphasigen Leistungsanschlüssen realisierbar.

Die Anschlussöffnungen des Gehäuses 80 dienen auch zur Aufnahme einphasiger Isolatoren, zum Beispiel von Schott- oder Stützisolatoren. Unter dem Begriff ,einphasiger Isolator' wird ein elektrischer Isolator verstanden wird, durch welchen lediglich ein Nominalleiter (eine Primärphase) geführt ist.

In einem weiteren, in Fig. 6 schematisch dargestellten Beispiel tritt die Achse 25 zwischen den Schaltelementen 15 jeweils aus dem Gehäuse aus und wieder ein. Dieses Ausführungsbeispiel hat bei vergleichbaren Abmessungen des Gehäuses wie in Fig. 5 zwar ein noch geringeres Gasvolumen als das in Fig. 5 dargestellte, erfordert dafür zusätzliche gasdichte Durchführungen 90.

## Patentansprüche

1. Gasisolierter Hoch- oder Mittelspannungsschalter, umfassend
- ein metallgekapseltes Gehäuse (80), welches einen Gasraum begrenzt,
- ein um eine erste Längsachse (v) drehbar angeordnetes Schaltelement (15), dazu ausgelegt, durch Drehung einen Kontakt mit einem Kontaktelement (20) zu schalten,
- eine Drehwelle (25) mit einer zweiten Längsachse (w), die gegenüber der ersten Längsachse (v) versetzt ist und sich parallel zur ersten Längsachse (v) erstreckt,
- ein mit der Drehwelle (25) zusammenwirkendes Hilfsgetriebe (30), das bei Drehung der Drehwelle (25) über einen Angriffspunkt (70) des Hilfsgetriebes (30) am Schaltelement (15) eine Drehbewegung des Schaltelements (15) um die erste Längsachse (v) bewirkt, und
- wobei in einer zur ersten Längsachse (v) senkrechten Ebene (18) eine Verbindungsgerade (16) vorhanden ist, die sich zwischen der ersten Längsachse (v) und dem Angriffspunkt (70) erstreckt und durch diese begrenzt ist, wobei die zweite Längsachse (w) der Drehwelle (25) die Ebene (18) an einem ersten Punkt (19) durchstößt, und wobei eine den ersten Punkt (19) und die Verbindungsgerade (16) verbindende erste Normale (21) in der Ebene (18) maximal so lang ist, wie die Verbindungsgerade (16).

2. Schalter nach Anspruch 1, wobei sich das Hilfsgetriebe (30) im Gasraum befindet und/oder die erste Normale (21) in der Ebene (18) maximal halb so lang ist, wie die Verbindungsgerade (16), insbesondere in einer Offenstellung des gasisolierten Hoch-oder Mittelspannungsschalters.

3. Schalter nach einem der vorhergehenden Ansprüche, wobei das Hilfsgetriebe (30) einen Hebel (30) umfasst und insbesondere ein Hebel (30) ist.

4. Schalter nach einem der vorhergehenden Ansprüche, wobei der Angriffspunkt des Hilfsgetriebes (30) an dem Schaltelement (15) mit der Drehposition des Schaltelements (15) variiert.

5. Schalter nach einem der vorhergehenden Ansprüche, wobei die Drehwelle (25) mit dem Hilfsgetriebe (30) und mit einer Antriebseinrichtung (75), vorzugsweise einem Elektromotor, verbunden ist.

6. Schalter nach Anspruch 3, wobei während der Bewegung des Schaltelements (15) durch Drehung des Hebels (30) der effektive Hebelarm des Hebels (30) in Bezug auf einen Masseschwerpunkt des Schaltelements (15) variiert.

7. Schalter nach einem der Ansprüche 3 oder 6, wobei der Hebel (30) in ein Langloch (35) oder einen Schlitz im Schaltelement (15) eingreift.

8. Schalter nach einem der vorhergehenden Ansprüche, wobei das Schaltelement (15) mit elektrischen Kontaktelementen (50) versehen ist, insbesondere mit federvorgespannten Lamellen.

9. Schalter nach einem der Ansprüche 4 bis 8, wobei das Hilfsgetriebe (30) mindestens zwei gelenkig gekoppelte, starre Segmente aufweist.

10. Schalter nach einem der vorhergehenden Ansprüche, wobei die Antriebseinrichtung (75) und das Schaltelement (15) mittels einer Isolation voneinander isoliert sind, wobei die Isolation mindestens eines der Merkmale aus der Gruppe umfasst, die besteht aus:
- mindestens eines der Elemente der Gruppe bestehend aus Drehwelle (25), Hilfsgetriebe (30), und Schaltelement (15), weist Kunststoff auf,
- mindestens ein Isolationselement (65) aus Kunststoff ist zwischen Drehwelle (25) und dem Hilfsgetriebe (30) angeordnet,
- mindestens ein Isolationselement (65) aus Kunststoff ist zwischen dem Hilfsgetriebe (30) und dem Schaltelement (15) angeordnet.

11. Schalter nach einem der vorhergehenden Ansprüche, umfassend drei Erdkontakte (5), drei Kontaktelemente (20), drei Schaltelemente (15), und drei Hilfsgetriebe (30), die sämtlich im Gasraum des Gehäuses (80) angeordnet sind, und wobei die Schaltelemente (15) über eine gemeinsame Drehwelle (25) angetrieben werden.

12. Schalter nach Anspruch 11, wobei das Gehäuse (80) nach Phasen separierte Anschlussöffnungen für Nominalleiter aufweist.

13. Schalter nach Anspruch 11 oder 12, wobei die Drehwelle (25) zum größeren Teil ihrer Länge vollständig innerhalb des Gehäuses (80) verläuft.

14. Gasisolierte Hoch- oder Mittelspannungsschaltanlage, **dadurch gekennzeichnet, dass** sie mindestens einen Schalter gemäß einem der Ansprüche 1 bis 13 umfasst.

15. Verwendung eines Schalters nach einem der Ansprüche 1 bis 13 als Erdschalter in einer gasisolierten Schaltanlage, wobei mindestens ein Schaltelement (15) auf Erdpotential liegt, und das Schaltelement optional über einen Erdkontakt (5) mit einem Leiter verbunden ist, der isoliert aus dem Gehäuse (80) herausgeführt ist und außerhalb des Gehäuses mit einem Erdpotential und dem Gehäuse (80) verbunden ist.
